(19) Europäisches Patentamt

**European Patent Office**

**Office européen des brevets**

(11) Veröffentlichungsnummer: **0 260 369 B1**

(12) **EUROPÄISCHE PATENTSCHRIFT**

(45) Veröffentlichungstag der Patentschrift: **16.12.92**

(21) Anmeldenummer: **87100370.3**

(22) Anmeldetag: **14.01.87**

(51) Int. Cl.⁵: **G02C 5/22**

(54) **Brillenscharnier.**

(30) Priorität: **18.07.86 DE 3624245**

(43) Veröffentlichungstag der Anmeldung:
**23.03.88 Patentblatt 88/12**

(45) Bekanntmachung des Hinweises auf die
Patenterteilung:
**16.12.92 Patentblatt 92/51**

(84) Benannte Vertragsstaaten:
**AT CH DE ES FR GB IT LI SE**

(56) Entgegenhaltungen:
**EP-A- 0 036 837**
**EP-A- 0 123 987**
**EP-A- 0 137 885**

(73) Patentinhaber: **Obergfell, Bernhard**
**Hauptstrasse 215**
**W-7819 Denzlingen(DE)**

(72) Erfinder: **Obergfell, Bernhard**
**Hauptstrasse 215**
**W-7819 Denzlingen(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 260 369 B1

## Beschreibung

Die Erfindung betrifft ein Brillenscharnier mit einem an der Brillenfassung befestigten Scharnierteil, welches zwei in Gebrauchsstellung übereinanderliegende, vorzugsweise röllchenförmige, Halter mit miteinander fluchtenden Durchtrittsöffnungen sowie einen in die Durchtrittsöffnungen passenden Scharnierstift und ein in den zwischenraum zwischen diesen beiden Haltern passendes Verbindungsteil ebenfalls mit einer Lochung für den Scharnierstift aufweist, welches Verbindungsteil ein Plättchen ist, das zwei Verankerungsbereiche mit jeweils einer vorzugsweise, Lochung hat, deren eine zu dem Scharnierstift der Halter der Brillenfassung paßt, während die andere von einem weiteren Haltestift an am Brillenbügel vorgesehenen, übereinander angeordneten Haltern von einem weiteren Haltestift durchsetzt ist.

Derartige Brillenscharniere sind in unterschiedlichen Konstruktionen bekannt. Dabei soll das Brillenscharnier einerseits unauffällig sein, andererseits ein zu weites Aufklappen des Brillenbügels verhindern und insbesondere den Brillenbügel auch entgegen Biegekräften beispielsweise senkrecht zu seinem Verlauf festlegen. Insbesondere bei einer Belastung senkrecht zur Schwenkebene des Brillenbügels können die herkömmlichen Scharniere, bei welchen zwischen die beiden röllchenförmigen Halter in der Regel ein einziges weiteres Röllchen eingreift, brechen und verursachen dann entweder den Austausch des gesamten Brillenbügels oder aufwendige und teure Reparaturen. Auch im Falle einer in Erstreckungsrichtung des Brillenbügels unmittelbar benachbarten Anordnung der Halter des Scharnieres besteht bei einer derartigen Überlastung eine Beschädigungsgefahr mit entsprechend großem Reparaturaufwand.

Aus der DE-PS 806 603 ist bereits ein Brillenscharnier der eingangs erwähnten Art bekannt, mit welchem die vorbeschriebenen Probleme nicht gelöst werden. Zwischen zwei Haltebereichen ist ein plättchenförmiges Verbindungsteil angeordnet, welches an jedem Halter durch einen Stift fixiert ist. Dabei berühren sich die beiden Halter mit ihren Stirnsetten und umschließen somit das Verbindungsplättchen praktisch über dessen gesamte Länge. Im Falle von Biegekräften in Richtung der Haltestifte werden also die Halter mit ihren Stirnseiten gegeneinander gedrückt und unterliegen somit einer Beschädigungsgefahr. Entsprechend aufwendig sind Reparaturen im Falle einer solchen Beschädigung.

Der Erfindung liegt deshalb die Aufgabe zugrunde, ein Brillenscharnier der eingangs erwähnten Art zu schaffen, bei welchem die Vorteile bisheriger Brillenscharniere bezüglich Formschönheit, Unauffälligkeit und Stabilität erhalten bleiben, dennoch aber im Falle einer Überbelastung und einer Beschädigung, vor allem eines Bruches im Scharnierbereich die erforderliche Reparatur einfach und preiswert ist und der Brillenbügel selbst weiter verwendbar bleibt.

Die Lösung dieser Aufgabe besteht darin, daß das Verbindungsteil lösbar an den Haltern befestigt ist, daß die beiden jeweils beabstandeten Halter einerseits der Brillenfassung und andererseits des Brillenbügels in Gebrauchsstellung in Richtung der Erstreckung des Brillenbügels und/oder des Verbindungsteiles einen lichten Abstand zwischen ihren einander zugewandten Stirnseiten haben, welcher von dem Verbindungsteil überbrückt ist, und daß die Stärke des Verbindungsteiles zumindest in dem von ihm überbrückten Abstand so gering gewählt ist, daß der entsprechende Abstand eine Sollbruchstelle an dem Verbindungsteil ist.

Bei einer zu starken Belastung der Scharnierverbindung wird also an einer vorgewählten Stelle durch die Sollbruchstelle erreicht, daß der Verbindungsteil bricht oder verbogen wird, ohne die an ihm angreifenden, jedoch beabstandeten Kalter der Brillenfassung oder des Scharnieres zu gefährden. Somit genügt es, die lösbaren Verbindungen zwischen den Haltern und dem Verbindungsteil zu lösen, dieses auszutauschen und wieder zu befestigen, um die erforderliche Reparatur durchzuführen. Dabei kann die Stärke oder Dicke des Verbindungsteiles selbstverständlich so gewählt werden, daß es bei beliebigen Belastungsrichtungen an der vorgesehenen Sollbruchstelle im Zwischenraum zwischen den Haltern einerseits der Brillenfassung und anderereits des Brillenbügels bricht, bevor diese Teile in irgend einer Weise bleibend verformt oder beschädigt werden. Dennoch bleibt die Formschönheit der Brille vor allem an der Außenseite erhalten, da diese Scharnierlösung in üblicher Weise an der Innenseite der Brillenfassung und des Brillenbügels angeordnet sein kann und in Gebrauchsstellung von dem Brillenbügel verdeckt wird.

Gerade dadurch, daß das plättchenförmige Verbindungsteil von den Haltern nicht weitestgehend umschlossen, sondern im Bereich des Zwischenraumes oder Abstandes freigelassen wird, kann es bei Biegebelastungen nachgeben, ohne die Halter und die Haltestifte zu einer gegenseitigen Berührung und Druckbelastung oder dergleichen zu bringen.

Besonders zweckmäßig ist es dabei, wenn der lichte Abstand oder Zwischenraum zwischen den Haltern bzw. zwischen deren einander zugewandten Stirnseiten zumindest etwa der Hälfte des Radius der röllchenförmigen Halter, vorzugsweise etwa zwei Drittel oder drei Viertel dieses Radius, gegebenenfalls dem gesamten Radius, entspricht. Dadurch ergibt sich ein deutlicher Abstand zwischen den Stirnseiten der Halter, der bei Verformungen und Überbelastungen dem Verbindungsteil genügend Platz gibt, um ohne Gefahr für die Halter verformt werden zu können.

Um die Montage des Verbindungsteiles nicht durch eine zu geringe Dicke in den Verankerungsbereichen zu erschweren, kann eine besonders zweckmäßige Ausgestaltung der Erfindung darin bestehen, daß der Querschnitt des plättchenförmigen Verbindungsteiles im Bereich des Zwischenraumes zwischen den beiden Scharnierhalterungen an der Sollbruchstelle gegenüber dem Querschnitt in den Verankerungsbereichen - außerhalb den vorhandenen Lochungen für die Scharnierstifte - vermindert ist.

Ausgestaltungsmöglichkeiten dieser Querschnittsverminderung zur gezielten Schaffung einer Sollbruchstelle an dem Verbindungsteil sind Gegenstand der Ansprüche 4 bis 7. Daraus ergeben sich unterschiedliche Möglichkeiten, eine gezielte Querschnittsverminderung in dem von dem Verbindungsteil überbrückten Zwischenraum an diesem Verbindungsteil vorzusehen, die einzeln oder kombiniert angewendet sein können, je nachdem, wieviel Platz für ein solches Verbindungsteil zur Verfügung steht und welche Kräfte einerseits an den Haltern und Scharnierstiften ohne Beschädigungsgefahr aufgenommen werden können, wie stark also die eigentliche Sollbruchstelle sein darf, um zwar bei einer Überbelastung zuerst und vor Beschädigung übriger Teile des Brillenscharnieres zu brechen, dem Brillenscharnier aber dennoch für den üblichen Gebrauch eine ausreichende Stabilität und Festigkeit zu geben. Besonders preiswert ist dabei eine gestanzte Lochung.

Für die gute Bedienbarkeit des Brillenscharnieres und eine die üblichen Platzverhältnisse nicht ändernde Verschwenkbarkeit der Brillenbügel ist es vorteilhaft, wenn das plättchenförmige Verbindungsteil im Bereich seiner Befestigung an dem Brillenbügel eine an der Innenseite des Brillenbügels anliegende nasenförmige oder nockenförmige Verlängerung über die Befestigungsstelle hinaus als Drehsicherung der Verbindung mit dem Bügel aufweist. Dadurch wird sichergestellt, daß die vorteilhafte Verbindung mit dem Brillenbügel ebenfalls über einen Stift nicht zu einer Verschwenkung an einer unerwünschten Stelle führt. Diese Drehsicherung kann jedoch auch dadurch erreicht werden, daß statt der erwähnten Stiftverbindung eine andere vorzugsweise lösbare oder drehfeste Verbindung in diesem Bereich gewählt wird.

Der Bereich der Sollbruchstelle kann gegenüber der Trennstelle zwischen Brillenbügel und Brillenfassung von der Brillenfassung gesehen zurückversetzt und insbesondere an der Innenseite des Brillenbügels angeordnet sein und dabei kann die durch die Befestigung des Verbindungsteiles an der Brillenfassung verlaufende Drehachse des Scharnieres von der Brillenfassung gesehen vorzugsweise auf derselben Höhe wie diese Trennstelle angeordnet sein. Dadurch ergibt sich trotz der Sollbruchstelle eine übliche Bedienbarkeit des Scharnieres und die Sollbruchstelle sebst befindet sich in einer Zone, die bei Überlastungen des Scharnieres unter ungünstigen Hebelarmen nahe der eigentlichen Schwenkstelle des Scharnieres angeordnet ist, so daß sie im Falle solcher Überlastungen bestimmungsgemäß reagieren kann.

Nachstehend ist die Erfindung mit ihren ihr als wesentlich zugehörenden Einzelheiten anhand der Zeichnung noch näher beschrieben.

Es zeigt:

Fig. 1     eine Draufsicht des erfindungsgemäßen Brillenscharnieres, wobei der Brillenbügel sich in Gebrauchsstellung befindet,

Fig. 2     eine Seitenansicht des erfindungsgemäßen Brillenscharnieres von der Innenseite der Brille her gesehen,

Fig. 3     einen Querschnitt einer lösbaren Befestigung eines Verbindungsteiles am Brillenbügel gemäß der Linie III-III in Fig. 2,

Fig. 4     eine Draufsicht eines Verbindungsteiles für das Brillenscharnier gemäß den Figuren 1 bis 3 und

Fig. 5     eine Seitenansicht des Verbindungsteiles gemäß Fig. 4.

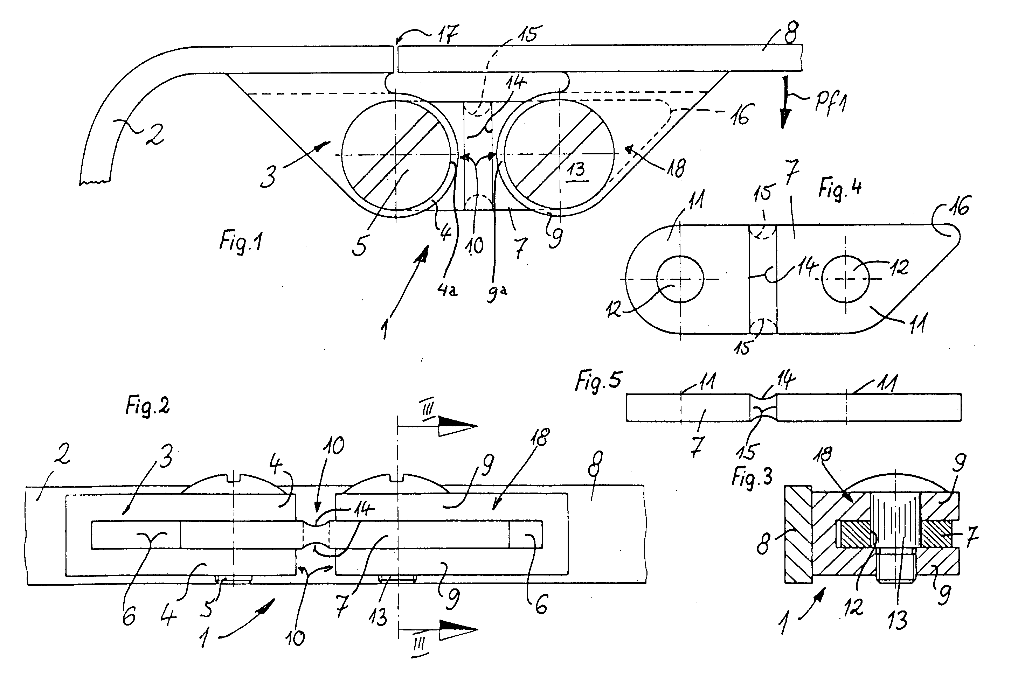

Ein im ganzen mit 1 bezeichnetes Brillenscharnier hat ein an der nur teilweise angedeuteten Brillenfassung 2 befestigtes erstes Scharnierteil 3, welches zwei in Gebrauchsstellung gemäß Fig. 2 übereinanderliegende, gemäß Fig. 1 röllchenförmige Halter 4 mit miteinander fluchtenden Durchtrittsöffnungen für den Scharnierstift 5 und ein in den Abstand 6 zwischen diesen beiden Haltern 4 passendes Verbindungsteil 7 ebenfalls mit einer Lochung für den Scharnierstift 5 aufweist. Das Verbindungsteil 7 ist außer dieser Befestigung an dem Scharnierteil 3 in noch zu beschreibender Weise am Brillenbügel 8 mittelbar befestigt, so daß dadurch die Verbindung zwischen Brillenfassung 2 und Brillenbügel 8 hergestellt ist.

Im Ausführungsbeispiel erkennt man auch am Brillenbügel 8 zwei mit Abstand 6 übereinander angeordnete etwa röllchenförmige Halter 9, zwischen welchen das Verbindungsteil 7 lösbar befestigt ist. Die beiden jeweils beabstandeten Halter 4 einerseits der Brillenfassung 2 und diejenigen Halter andererseits des Brillenbügels 8 haben gemäß den Figuren 1 und 2 in Gebrauchsstellung in Richtung der Erstreckung des Brillenbügels 8 und des Verbindungsteiles 7 einen lichten Abstand und Zwischenraum 10 zwischen sich, welcher von dem Verbindungteil 7 überbrückt ist. Die Stärke oder Dicke des Verbindungsteiles 7 ist zumindest in diesem von ihm überbrückten Abstand- oder Zwischenraumbereich so gering gewählt, daß dieser Zwischenraum 10 bzw. der Verbindungsteil 7 innerhalb dieses Zwischenraumes 10 eine Sollbruchstelle bildet .

Der lichte Abstand oder Zwischenraum 10 zwischen den Haltern 4 und 9 bzw. zwischen deren einander zugewandten Stirnseiten 4a und 9a entspricht dabei im Ausführungsbeispiel etwa zwei Drittel des Radius der röllchenförmigen Halter 4 und 9 im Bereich ihrer kreisbogenförmigen Stirnseiten 4a und 9a. Unter Umständen kann aber auch schon ein Abstand im halben Radius genügen insbesondere dann, wenn die Höhe der Halter 4 quer zur Längserstreckung des plättchenförmigen Verbindungsteiles 7 nicht allzu groß ist, so daß genügend Bewegungsfreiheit für eine Verformung des Verbindungsteiles 7 bei einer Überbelastung verbleibt. Noch mehr Platz für eine solche Verformung ergibt sich, wenn der Abstand 10 etwa dem Radius der röllchenförmigen Halter in ihrem stirnseitigen Bereich entspricht. Dabei wird dieser Abstand 10 gemäß Fig. 1 in vorteilhafter Weise von dem eigentlichen Brillenbügel 8 nach der Seite hin verdeckt.

Anhand der Figuren 2 und 5 erkennt man vor allem, daß das Verbindungsteil 7 im Ausführungsbeispiel ein flaches Plättchen ist, welches zwei Verankerungsbereiche 11 vorzugsweise mit jeweils einer vertikalen Lochung 12 hat, deren eine Lochung zu dem Scharnierstift 5 der Halter 4 der Fassung 2 paßt, während die andere Lochung 12 von einem Haltestift 13 an den Haltern 9 des Bügels 8 durchsetzt ist, was durch die Figuren 2 und 3 verdeutlicht ist. In vorteilhafter Weise können dabei der Haltestift 5 und der Haltestift 13 identisch ausgebildet sein, um die Zahl der erforderlichen verschiedenen Teile des Brillenscharnieres 1 gering zu halten und dadurch das gesamte Brillenscharnier 1 montage- und reparaturfreundlich zu gestalten.

Die Sollbruchstelle an dem Verbindungsplättchen 7 im Zwischenraum 10 könnte zwar allein durch die beidseitige Einspannung zwischen den Haltern 4 einerseits und den Haltern 9 andererseits und eine entsprechende Wahl des Querschnittes des gesamten Verbindungsteiles 7 schon mit ausreichender Sicherheit festgelegt sein. Im Ausführungsbeispiel ist jedoch eine Weiterbildung dargestellt, die die Sollbruchstelle noch besser ausprägt, indem nämlich der Querschnitt des plättchenförmigen Verbindungsteiles 7 im Bereich des Zwischenraumes 10 zwischen den beiden einerseits von den Haltern 4 und dem Stift 5 und andererseits den Haltern 9 und dem Stift 13 gebildeten Scharnierhalterung an der Sollbruchstelle gegenüber dem Querschnitt in den Verankerungsbereichen 11 vermindert ist, so daß durch diese körperliche Querschnittsverminderung erst recht sichergestellt ist, wo die Scharnierverbindung bei einer Überlastung zur Schonung der übrigen Scharnierteile nachgeben oder brechen kann, so daß anschließend nur ein neues Verbindungsteil 7 eingefügt werden muß, um das Scharnier zu reparieren. Dabei ist der Zwischenraum 10 von erheblicher Bedeutung, weil er nicht nur das plättchenförmige Verbindungsteil 7 neben dessen Sollbruchstelle fest einspannt, sondern bei einer Biegebelastung und Verbiegung, die dem Bruch vorausgeht, den Haltern 4 und 9 relativ zueinander genügend Spielraum und Bewegungsfreiheit läßt, um deren gegenseitige Verformung zu verhindern, die bei einer unmittelbaren Berührung dieser Teile nicht zu vermeiden wäre.

In den Figuren 1 und 4 erkennt man eine Lösung, bei welcher das plättchenförmige Verbindungsteil 7 zwischen seinen Verankerungsbereichen 11 eine an wenigstens einer Oberfläche, gemäß Fig. 2 und 5 an beiden Oberflächen, eine Einbuchtung oder rinnenförmige Nut 14 od.dgl. hat, die in diesem Falle über die quer zu einer Verbindungslinie zwischen den Verankerungsbereichen 11 orientierte Breite des Verbindungsteiles 7 verlaufen.

In Fig. 1, 2 und 4 ist außerdem angedeutet, daß das plättchenfömige Verbindungsteil 7 zwischen seinen beiden Befestigungsstellen 11 wenigstens eine ihn schwächende, über seine gesamte Dicke verlaufende seitliche Einkerbung 15 haben kann, die statt der rinnenförmigen Nut 14 oder mit dieser gemeinsam vorgesehen sein kann. Aus Symmetriegründen sind dabei im Ausführungsbeispiel an beiden Schmalseiten derartige Einkerbungen 15 angedeutet. Eine weitere Möglichkeit, die zusätzlich oder statt der vorbeschriebenen Formen zur Querschnittsverminderung im Bereich der Sollbruchstelle im Zwischenraum 10 möglich ist, besteht in einer diesen Bereich des Verbindungsteiles 7 durchsetzenden Lochung.

Wenn in der im Ausführungsbeispiel angedeuteten Weise an beiden einander im Zwischenraum 10 zwischen den Haltern 4 und 9 gegenüberliegenden Schmalseiten des plättchenförmigen Verbindungsteiles 7 randoffene, ihn schwächende Einbuchtungen 15, Kerben od.dgl. Ausnehmungen vorgesehen sind und außerdem an den Ober- und Unterflächen Nuten 14 zur Schwächung und Ausprägung der Sollbruchstelle dienen, ist es vorteilhaft, wenn diese Einformungen wie in den Figuren angedeutet einander in ihrer Breite etwa entsprechen. Eine solche erhebliche Ausprägung der Sollbruchstelle im Zwischenraum 10 durch unterschiedliche Formgebungsmaßnahmen kann vor allem dann vorteilhaft sein, wenn das Scharnier 1 aufgrund der Konstruktion der gesamten Brille relativ stark ausgeprägt ist, so daß die Abmessungen des Verbindungsteiles 7 ebenfalls entsprechend groß sind und dann ein Verbindungsteil 7 ohne solche zusätzlichen Maßnahmen eine zu große Festigkeit hätte, um an der vorgesehenen Sollbruchstelle im Zwischenraum 10 bei Überlastungen der Scharnierverbindung verformt oder gebrochen zu werden, bevor die übrigen Schanierteile beschädigt werden.

In den Figuren 1 und 4 erkennt man noch, daß das plättchenförmige Verbindungsteil 7 im Bereich seiner Befestigung an dem Brillenbügel 8 eine an der Innenseite des Brillenbügels 8 anliegende nasenförmige oder nockenförmige Verlängerung 16 über die Befestigungsstelle hinaus als Drehsicherung dieser Verbindung mit dem Bügel 8 aufweist. Vor allem anhand der Figur 1 erkennt man deutlich, daß bei einer Verschwenkung des Brillenbügels 8 in Richtung des Pfeiles Pf1 diese Verlängerung 16 verhindert, daß eine Schwenkung um den Stift 13 erfolgt. Somit wird die Schwenkachse des Brillenbügels 8 in erwünschter Weise in den Stift 5 verlegt. Der Bereich der Sollbruchstelle ist nun gegenüber der Trennstelle 17 zwischen dem Brillenbügel 8 und der Brillenfassung 2 von der Brillenfassung 2 gesehen zurückversetzt und befindet sich in von außen verdeckter Weise an der Innenseite des Brillenbügels 8. Die durch die Befestigung des Verbindunteiles 7 an der Brillenfassung 2 verlaufende, vorstehend schon erwähnte Drehachse innerhalb des Stiftes 5 ist ihrerseits von der Brillenfassung 2 gesehen auf derselben Höhe wie diese Trennstelle 17 angeordnet. Auf diese Weise ergibt sich trotz der Ausgestaltung des Brillenscharnieres 1 mit zwei Stiften 5 und 13 eine Bedienbarkeit und Verschwenkung des Brillenbügels 8 in gewohnter Weise, gleichzeitig wird aber die erfindungsgemäße Sollbruchstelle so nah an die Drehachse verlegt, daß in diesem Bereich auftretende Überlastungen in gewünschter Weise unmittelbar auf diese Sollbruchstelle wirken.

Wird die Verbindung zwischen Brillenfassung 2 und Bügel 8 über das Scharnier 1 in irgend einer Weise überlastet, wird in gezielter Weise das sehr preiswerte und einfach auswechselbare Verbindungsteil 7 beschädigt oder gebrochen, so daß die Wiederherstellung der Scharnierverbindung und somit der gesamten Brille sehr einfach und schnell erfolgen kann. Es muß nicht mehr der gesamte Brillenbügel ersetzt oder ein an ihm befindliches, bisher bruchgefährdetes Scharnierteil nach seiner Beschädigung abgetrennt und durch ein neu anzulötendes derartiges Teil ersetzt werden, sondern es brauchen nur die Stifte 5 und 13, die zweckmäßigerweise in bekannter Form Gewindestifte sind, herausgedreht und nach Austausch des Verbindungsteiles 7 wieder eingeschraubt zu werden. Dies wird dadurch erreicht, daß neben dem üblichen ersten Scharnierteil 3 nun praktisch ein zweites Scharnierteil 18 durch die Halter 9 und den Stift 13 gebildet ist und die Scharnierteile 3 und 18 einen von dem Verbindungteil 7 überbrückten Abstand als Sollbruchstelle haben.

Das Verbindungsteil kann aus Metall und/oder Kunststoff bestehen.

**Patentansprüche**

1. Brillenscharnier (1) mit einem an der Brillenfassung (2) befestigten Scharnierteil (3), welches zwei in Gebrauchsstellung übereinanderliegende, vorzugsweise röllchenförmige, Halter (4) mit miteinander fluchtenden Durchtrittsöffnungen sowie einen in die Durchtrittsöffnungen passenden Scharnierstift (5) und ein in den zwischenraum (6) zwischen diesen beiden Haltern (4) passendes Verbindungsteil (7) ebenfalls mit einer Lochung für den Scharnierstift (5) aufweist, welches Verbindungteil (7) ein Plättchen ist, das zwei Verankerungsbereiche (11) mit jeweils einer Lochung (12) hat, deren eine zu dem Scharnierstift (5) der Halter (4) der Brillenfassung (2) paßt, während die andere von einem weiteren Haltestift (13) an am Brillenbügel (8) vorgesehenen, übereinander angeordneten Haltern (9) durchsetzt ist, **dadurch gekennzeichnet,** daß das Verbindungteil (7) lösbar an den Haltern (4; 9) befestigt ist, daß die beiden jeweils beabstandeten Halter (4; 9) einerseits der Brillenfassung (2) und andererseits des Brillenbügels (8) in Gebrauchsstellung in Richtung der Erstreckung des Brillenbügels (8) und/oder des Verbindungsteiles (7) einen lichten Abstand (10) zwischen ihren einander zugewandten Stirnseiten (4a,9a) haben, welcher von dem Verbindungsteil (7) überbrückt ist, und daß die Stärke des Verbindungsteiles (7) zumindest in dem von ihm überbrückten Abstand so gering gewählt ist, daß der an dieser Stelle befindliche Teil des Verbindungsteils (7) eine Sollbruchstelle ist.

2. Brillenscharnier nach Anspruch 1, dadurch gekennzeichnet, daß der lichte Abstand oder Zwischenraum (10) zwischen den Haltern (4; 9) bzw. zwischen deren einander zugewandten Stirnseiten (4a, 9a) zumindest etwa der Hälfte des Radius der röllchenförmigen Halter (4; 9), vorzugsweise etwa zwei Drittel oder drei Viertel dieses Radius, gegebenenfalls dem gesamten Radius, entspricht.

3. Brillenscharnier nach Anspruch 1 oder 2, dadurch gekennzeichnet, daß der Querschnitt des plättchenförmigen Verbindungsteiles (7) im Bereich des Zwischenraumes (10) zwischen den beiden Scharnierteilen (3, 18) an der Sollbruchstelle (10) gegenüber dem Querschnitt in den Verankerungsbereichen (11) vermindert ist.

4. Brillenscharnier nach einem der Ansprüche 1 bis 3, dadurch gekennzeichnet, daß das plättchenförmige Verbindungsteil (7) zwischen seinen Verankerungsbereichen (11) eine wenigstens an einer Oberfläche, vorzugsweise an den beiden einander gegenüberliegenden horizontalen Flächen, Einbuchtungen, Nuten (14) od.dgl. Schwächungen hat, die insbesondere über die quer zu einer Verbindungslinie zwischen den Verankerungsbereichen (11) orientierte Breite verlaufen.

5. Brillenscharnier nach einem der Ansprüche 1 bis 4, dadurch gekennzeichnet, daß das plättchenförmige Verbindungsteil (7) als Querschnittsverminderung zwischen seinen beiden Befestigungsstelle (11) wenigstens eine ihn schwächende, über seine gesamte Dicke verlaufende randoffene seitliche Einkerbung (15) oder dergleichen Lochung hat.

6. Brillenscharnier nach einem der Ansprüche 1 bis 5, dadurch gekennzeichnet, daß an den beiden einander im Zwischenraum (10) zwischen den Haltern (4; 9) gegenüberliegenden Schmalseiten des plättchenförmigen Verbindungsteiles (7) vorzugsweise randoffene, ihn schwächende Einbuchtungen, Kerben (15) oder dergleichen Ausnehmungen sind.

7. Brillenscharnier nach einem der Ansprüche 1 bis 6, dadurch gekennzeichnet, daß die Einformungen an der Ober- und/oder Unterseite des plättchenförmigen Verbindungsteiles (7) und an seinen Schmalseiten am selben Querschnitt des plättchenförmigen Verbindungsteiles (7) angeordnet sind und einander in ihrer Breite vorzugsweise etwa entsprechen.

8. Brillenscharnier nach einem der Ansprüche 1 bis 7, dadurch gekennzeichnet, daß das Verbindungsteil (7) im Bereich seiner Befestigung an dem Brillenbügel (8) eine an der Innenseite des Brillenbügels (8) anliegende, nasenförmige oder nockenförmige Verlängerung (16) über die Befestigungsstelle hinaus als Dreh- oder Schwenksicherung der Verbindung mit dem Bügel (8) aufweist.

9. Brillenscharnier nach einem der Ansprüche 1 bis 8, dadurch gekennzeichnet, daß der Bereich (10) der Sollbruchstelle gegenüber der Trennstelle (17) zwischen Brillenbügel (8) und Brillenfassung (2) von der Brillenfassung (2) gesehen zurückversetzt und insbesondere an der Innenseite des Brillenbügels (8) angeordnet ist und daß die durch die Befestigung des Verbindungsteiles (7) an der Brillenfassung (2) verlaufende Drehachse (Stift 5) des Scharnieres (1) von der Brillenfassung (2) gesehen vorzugsweise auf derselben Höhe wie diese Trennstelle (17) angeordnet ist.

10. Brillenscharnier nach einem der vorstehenden Ansprüche, dadurch gekennzeichnet, daß der lichte Abstand (10) zwischen den Haltern (4; 9) in Gebrauchsstellung nach der Außenseite hin durch den Brillenbügel (8) verdeckt ist.

**Claims**

1. A spectables hinge (1) including a hinge portion (3) affixed to the spectacle frame (2), said hinge portion having two preferably roller-shaped holders (4) superimposed in the position of use having openings therethrough in alignment with each other, as well as a hinge pin (5) fitting in said openings, and fitting in the space (6) between said two holders (4) a link (7) likewise having a hole for the hinge pin (5), said link (7) being a lamina having two anchoring areas (11) with in each case one hole (12), the one hole fitting the hinge pin (5) of the holder (4) of the spectacle frame (2), while the other one is traversed by a further retaining pin (13) at holders (9) which are provided at the bow (8) of the spectacles and are arranged on top of each other, **characterized in that** the link (7) is detachably affixed to the holders (4;9),that in the position of use the two in each case spaced holders (4;9) of the spectacle frame (2) on the one hand and of the spectacle bow (8) on the other hand have a clearance between their confronting faces (4a, 9a) in the direction in which the spectacle bow (8) and/or link (7) extend(s), said clearance being bridged by the link (7), and that at least in the clearance bridged by the link (7) the thickness of the latter is selected to be so small that that part of the link (7) which is situated at said point is a predetermined breaking point.

2. A spectacles hinge as claimed in claim 1, characterized in that the clearance or space (10) between the holders (4;9) or between their confronting faces (4a, 9a) corresponds to at least about half the radius of the roller-shaped holders (4;9), preferably to about two thirds or three quarters of said radius, possibly to the entire radius.

3. A spectacles hinge as claimed in claim 1 or claim 2, characterized in that the cross section of the lamina-like link (7) is reduced in the area of the space (10) between the two hinge portions (3, 18) at the predetermined breaking point (10) as compared to the cross section in the anchoring areas (11).

4. A spectacles hinge as claimed in any one of claims 1 to 3, characterized in that the lamina-like link (7) has between its anchoring areas (11) indentations, grooves (14) or like reductions which are located at at least one surface, preferably at both mutually opposed horizontal surfaces and in particular run over the breadth oriented crosswise to a connecting line between the anchoring areas (11).

5. A spectacles hinge as claimed in any one of claims 1 to 4, characterized in that the lamina-like link (7) has as a reduction of cross section between its two mounting locations (11) at least one open-ended, lateral notch (15) or like perforation weakening said link and running throughout the thickness thereof.

6. A spectacles hinge as claimed in any one of claims 1 to 5, characterized in that preferably open-ended indentations, notches (15) or like recesses weakening the lamina-like link (7) are located at both narrow sides thereof mutually opposed in the space (10) between the holders (4;9).

7. A spectacles hinge as claimed in any one of claims 1 to 6, characterized in that the depressions at the upper side and/or underside of the lamina-like link (7) and at the narrow sides thereof are arranged at the same cross section of the lamina-like link (7) and preferably approximate one another in their width.

8. A spectacles hinge as claimed in any one of claims 1 to 7, characterized in that the link (7) has in the area where it is mounted to the bow (8) of the spectacles a nose-like or cam-like extension (16) which projects beyond the mounting location and rests against the inside of the bow (8) as a safeguard to prevent turning or swivelling of the joint to the bow (8).

9. A spectacles hinge as claimed in any one of claims 1 to 8, characterized in that seen from the spectacle frame (2) the area (10) of the predetermined breaking point is set back relative to the point of separation (17) between spectacle bow (8) and spectacle frame (2) and in particular is arranged at the inside of the spectacle bow (8) and that seen from the spectacle frame (2) the axis of rotation (pin 5) of the hinge (1) running through the mounting of the link (7) to the spectacle frame (2) is preferably arranged level with said point of separation (17).

10. A spectacles hinge as claimed in any one of the preceding claims, characterized in that the clearance (10) between the holders (4;9) is covered towards the outside by the bow (8) of the spectacles in the position of use.

## Revendications

1. Charnière de lunettes (1) comprenant une partie de charnière (3) fixée à la partie centrale appelée face (2) de la monture, qui comporte deux supports (4) superposés en position d'utilisation, de préférence en forme de roulette, avec des ouvertures de passage mutuellement alignées, ainsi qu'une cheville d'articulation (5) s'ajustant dans les ouvertures de passage, et une pièce de liaison (7) s'ajustant entre ces deux supports (4) et présentant également un perçage pour la cheville d'articulation (5), pièce de liaison (7) qui est une plaquette possédant deux zones d'ancrage (11) ayant chacune un perçage (12), l'un des perçages de la pièce de liaison correspondant à la cheville d'articulation (5) des supports (4) de la face (2), tandis que l'autre est traversé par une cheville supplémentaire de maintien (13) coordonnée à des supports superposés (9) prévus sur la branche (8),
caractérisée en ce que la pièce de liaison (7) est fixée amovible aux supports (4; 9), que les deux supports (4; 9) situés à distance l'un de l'autre, de la face (2) d'une part et de la branche (8) d'autre part, définissent en position d'utilisation une distance libre (10) en direction de l'étendue de la branche (8) et/ou de la pièce de liaison (7) entre leurs extrémités (4a, 9a) dirigées l'une vers l'autre, distance qui est couverte par la pièce de liaison (7), et que l'épaisseur de la pièce de liaison (7) est choisie si faible, tout au moins dans la distance couverte par elle, que la portion de la pièce de liaison (7) se trouvant à cet endroit constitue un point de rupture.

2. Charnière de lunettes selon la revendication 1, caractérisée en ce que la distance libre ou intervalle (10) entre les supports (4; 9) ou, plus exactement, entre leurs extrémités (4a, 9a) dirigées l'une vers l'autre, correspond au moins à peu près à la moitié du rayon des supports (4; 9) en forme de roulette, de préférence à environ deux tiers ou trois quarts de ce rayon, le cas échéant à la totalité de ce rayon.

3. Charnière de lunettes selon la revendication 1 ou 2, caractérisée en ce que la section droite de la pièce de liaison (7) en forme de plaquette est réduite dans la zone de l'intervalle (10) entre les deux parties de charnière (3, 18), au point de rupture (10), par rapport à la section droite dans les zones d'ancrage (11).

4. Charnière de lunettes selon une des revendications 1 à 3, caractérisée en ce que la pièce de liaison (7) en forme de plaquette présente, entre ses zones d'ancrage (11), un affaiblissement prévu sur au moins une surface, de préférence sur les deux faces horizontales mutuellement opposées, sous la forme d'une échancrure, un sillon (14) ou analogue, affaiblissement qui s'étend notamment sur toute la largeur orientée transversalement à une ligne reliant les zones d'ancrage (11).

5. Charnière de lunettes selon une des revendications 1 à 4, caractérisée en ce que la pièce de liaison (7) en forme de plaquette possède, comme réduction de section entre ses deux points de fixation (11), au moins une entaille latérale (15) ouverte dans le bord, s'étendant sur toute l'épaisseur de la pièce et affaiblissant celle-ci, ou un enlèvement de matière ou un perçage analogue.

6. Charnière de lunettes selon une des revendications 1 à 5, caractérisée en ce que les deux petits côtés mutuellement opposés de la portion de plaquette située dans l'intervalle (10) entre les supports (4; 9) de la pièce de liaison (7) en forme de plaquette, présentent des échancrures, des entailles (15) ou des évidements analogues, s'ouvrant de préférence dans le bord et affaiblissant la pièce de liaison.

7. Charnière de lunettes selon une des revendications 1 à 6, caractérisée en ce que les formes rentrantes sont disposées sur le côté supérieur et/ou le côté inférieur de la pièce de liaison en forme de plaquette et sur les petits côtés de sa portion correspondant à l'intervalle (10), sont prévues sur la même section droite de la pièce de liaison (7) en forme de plaquette et possèdent de préférence une largeur sensiblement égale.

8. Charnière de lunettes selon une des revendications 1 à 7, caractérisée en ce que la pièce de liaison (7) comporte, dans la zone de sa fixation à la branche (8), un prolongement (16) qui est appliqué contre le côté intérieur de la branche (8), qui affecte la forme d'un nez ou d'un bec, s'étend au-delà du point de fixation et sert de moyen pour empêcher la rotation ou le pivotement au droit de la liaison avec la branche (8).

9. Charnière de lunettes selon une des revendications 1 à 8, caractérisée en ce que la zone (10) du point de rupture est disposée en retrait par rapport au point de séparation (17) entre la branche (8) et la face (2) de la monture, vue à partir de la face (2), et est disposée en particulier sur le côté intérieur de la branche (8), et que l'axe de rotation (cheville 5) de la charnière (1) passant par la fixation de la pièce de liaison (7) sur la face (2) de la monture, est disposé de préférence, vu à partir de la face (2), à la même hauteur que le point de séparation (17).

10. Charnière de lunettes selon une des revendications précédentes, caractérisée en ce que la distance libre (10) entre les supports (4; 9) est cachée vers l'extérieur par la branche (8) à la position d'utilisation.

Fig.1

Fig.2

Fig.3

Fig.4

Fig.5